# EUROPÄISCHE PATENTSCHRIFT

(11) **EP 2 447 676 B1**
(45) Veröffentlichungstag und Bekanntmachung des Hinweises auf die Patenterteilung: **26.10.2016**
(21) Anmeldenummer: 10188909.5
(22) Anmeldetag: 26.10.2010
(51) Int. Cl.: G01D 5/249, G01D 5/244

(54) **Verfahren zum Herstellen eines magnetischen Linearmassstabs**
Method for producing a magnetic linear scale
Procédé de fabrication d'une échelle linéaire magnétique

(43) Veröffentlichungstag der Anmeldung: 02.05.2012
(73) Patentinhaber: Bogen Electronic GmbH, 14163 Berlin (DE)
(72) Erfinder:
(74) Vertreter: Elbel, Michaela

(56) Entgegenhaltungen:
- EP-A1- 1 006 342
- WO-A1-03/011733
- DE-A1-102005 049 559
- DE-U1- 20 302 273

## Beschreibung

Die Erfindung betrifft ein Verfahren zum Herstellen eines magnetischen Linearmaßstabs.

Im Werkzeugmaschinenbau ist es bekannt einen magnetischen Linearmaßstab zur Bestimmung einer absoluten Position eines Werkzeugschlittens zu verwenden. Hierzu ist der magnetische Linearmaßstab in Form eines langgestreckten magnetisierten Bands auf eine Referenzschiene aufgebracht, wobei das Band wechselseitig mit Nordpolen und Südpolen magnetisiert ist. Daraus ergibt sich für den Linearmaßstab ein binäres Bitmuster, das von einem Sensor gelesen wird, der an dem Werkzeugschlitten angebracht ist. Wird der Werkzeugschlitten entlang des Linearmaßstabs bewegt, so werden von dem Sensor wechselseitig Südpole und Nordpole registriert, woraus sich aus der Anzahl der Polwechsel und der Teilungsbreite der einzelnen Nord- und Südpolmagnetisierungen die absolute Position des Werkzeugschlittens ermitteln lässt.

Der Linearmaßstab ist herkömmlich mit einer Inkrementalspur und einer Absolutspur versehen, die unmittelbar nebeneinanderliegend angeordnet sind. Die Inkrementalspur weist bei gleichbleibender Teilungsbreite einen regelmäßigen Wechsel zwischen Südpolen und Nordpolen auf, wohingegen auf der Absolutspur ein Binärcode mit der Teilungsbreite der Inkrementalspur durch eine entsprechende Magnetisierung hinterlegt ist. Der Binätcode ist derart gewählt, dass ohne Zuhilfenahme eines Referenzpunkts auf dem Linearmaßstab die absolute Position des Schlittens bestimmbar ist.

Es ist bekannt für den Binärcode eine Pseudozufallsverteilung mit vorgegebener Stellenzahl zu wählen, wobei die Pseudozufallsverteilung beispielsweise mit Hilfe von mathematischen Reihen erzeugt wird. Für den damit erzielten Pseudozufallscode (Engl.: Pseudo-Random-Code) werden im Binärzahlenumfang, der sich aus der Stellenzahl ergibt, Zufallszahlen gewählt, die als Bitmuster mit entsprechender Nordpol-Südpol-Magnetisierung auf dem Linearnaßstab aufgebacht sind. Die auf dem Linearmaßstab hintereinanderliegenden Bitmuster der Zufallszahlen sind so gewählt, dass sich die Bitmuster jeweils mit ihrem unmittelbar rückwärts angeordneten Bitmuster bis auf ein einziges Bit überlappen. Dies fortgeführt ergibt pro Bit unter Berücksichtigung der Stellenzahl eine Abfolge von Pseudozufallszahlen, die aneinandergereiht die Pseudozufallsverteilung bilden.

Die Abtastung des Linearmaßstabs durch den Sensor erfolgt herkömmlich berührungslos, so dass zwischen dem Sensor und dem Linearmaßstab ein entsprechender Messabstand vorgehalten ist. Die in dem Messabstand vorliegende Magnetfelddichte ist allerdings durch die Unregelmäßigkeit der Nord-Süpol-Wiederholungen der Absolutspur inhomogen, wodurch die Messgenauigkeit des Sensors beeinträchtigt ist. Abhilfe schafft ein optimiertes Auswählen der einzelnen Pseudozufallszahlen dahingehend, dass die Pseudozufallszahlen in ihrer binären Darstellungsweise lediglich eine minimale Anzahl von Wiederholungen gleichartiger Pole aufweisen. Dadurch ist eine Vergleichmäßigung des Magnetfelds des Linearmaßstabs erzielt. Allerdings verbleibt das magnetische Feld der Absolutspur mit einer Restinhomogenität, die beim Abtasten des Magnetfelds durch den Sensor zu einer Messungenauigkeit führt.

In DE 10 2C05 049559 A1 ist ein Verfahren zum Aufbringen von Magnetkode auf magnetisierbare Schlichten beschrieben. Ferner ist in EP 1 006 342 A1 ein Markierungsverfahren von Messspuren beschrieben, und in WO 03/011733 A1 ist eine Aufzuganlage mit einem Messsystem zur Ermittlung der absoluten Kabinenposition beschrieben.

Aufgabe der Erfindung ist es ein Verfahren zum Herstellen eines magnetischen Linearmaßstabs zu schaffen, wobei der mit dem Verfahren hergestellte magnetische Linearmaßstab von einem Sensor mit hoher Genauigkeit berührungsfrei abtastbar ist.

Die Aufgabe wird gelöst mit den Merkmalen des Patentanspruchs 1. Bevorzugte Ausgestaltungen dazu sind in den weiteren Patentansprüchen angegeben.

Das erfindungsgemäße Verfahren zum Herstellen des magnetischen Linearmaßstabs weist die Schritte auf: Festlegen einer Gesamtlänge des Linearmaßstabs; Erzeugen einer Binärsequenz aus "0"-Binärziffern und "1"-Binärziffern basierend auf einem binären Pseudozufallscode aus Zufallszahlen; Ermitteln einer Soll-Teilungsbreite in Abhängigkeit der Gesamtlänge des Linearmaßstabs und der Anzahl der Binärziffern der Binärziffersequenz; Herstellen einer Absolutspur des Linearmaßstabs durch Aufmagnetisieren der Binärziffersequenz, indem für jede "0"-Binärziffer ein Nordpol bzw. ein Südpol und für jede "1"-Binärziffer ein Südpol bzw. ein Nordpol magnetisiert wird, wobei jeder Nordpol bzw. Südpol und jeder Südpol bzw. Nordpol die Soll-Teilungsbreite hat, wobei die Maximallänge der "0"-Binärzifferketten und die Maximallänge der "1"-Binärzifferketten jeweils fünf beträgt; Definieren eines Messabstands vom Linearmaßstab und Messen der Magnetisierung der Absolutspur mit einem Sensor, wobei der Sensor den Messabstand von dem Linearmaßstab hat und die Messteilungsbreiten der Nordpole und der Südpole der Absolutspur misst; Überlagern der Absolutspur einer Nachmagnetisierung derart, dass die Messteilungsbreiten der Absolutspur innerhalb eines Toleranzwerts bezogen auf die Soll-Teilungsbreite liegen, gegebenenfalls mehrfach wiederholt; Herstellen einer Inkrementalspur des Linearmaßstabs durch Aufmagnetisieren eines "0-1"-Binärziffermusters unmittelbar neben der Absolutspur, indem für jede "0"-Binärziffer ein Nordpol bzw. Südpol und für jede "1"-Binärziffer ein Südpol bzw. Nordpol magnetisiert wird, wobei jeder Nordpol und jeder Südpol die Soll-Teilungsbreite hat; Messen der Magnetisierung der Inkrementalspur mit dem Sensor, wobei der Sensor den Messabstand von dem Linearmaßstab hat und die Messteilungsbreiten der Nordpole und der Südpole der Inkrementalspur misst; Überlagern der Inkrementalspur einer Nachmagnetisierung derart, dass die Messteilungsbreiten der Inkrementalspur innerhalb eines Toleranzwerts bezogen auf die Soll-Teilungsbreite liegen, gegebenenfalls mehrfach wiederholt. Bevorzugt ist es, dass die Binärziffersequenz aus den "0"-Binärziffern und den "1"-Binärziffern mit dem binären Pseudozufallscode derart erzeugt wird, dass jede Zufallszahl nur einmal auftritt sowie die Stellenzahl der größten Zufallszahl minimiert ist, die Maximallänge der "0"-Binärzifferketten und die Maximallänge der "1"-Binärzifferketten minimiert sind und die Längenunterschiede von Binärzifferkette zu Binärzifferkette minimiert ist. Die größte Zufallszahl hat bevorzugt 12 Binärzifferstellen. Außerdem beträgt der Toleranzwert für die Messteilungsbreiten bezogen auf die Soll-Teilungsbreite kleiner oder gleich 0,01. Die Soll-Teilungsbreite ist bevorzugt größer oder gleich 5 mm. Außerdem ist es bevorzugt, dass der Sensor eine analoge Hallzelle ist. Die Inkrementalspur und die Absolutspur sind nebeneinander auf dem Linearmaßstab angebracht. Dadurch beeinflussen sich die Magnetfelder der Inkrementalspur und der Absolutspur gegenseitig, wodurch eine Ungenauigkeit beim Lesen der Inkrementalspur und der Absolutspur mit dem Sensor sich ergibt. Abhilfe schafft die Maßnahme, dass der Pseudozufallscode derart erzeugt wird, dass sich minimal mögliche Pollängen für die Nordpole und die Südpole ergeben. Dadurch ergibt sich vorteilhaft eine Streufeldoptimierung des Linearmaßstabs. Darauf aufbauend wird erfindungsgemäß eine Korrektur durch die Nachmagnetisierungen der Inkrementalspur und der Absolutspur vorgenommen. Dabei wird die vom Sensor im Messabstand real gemessene Flussdichte registriert und durch die Nachmagnetisierung entsprechend der im Messabstand vorliegenden Inhomogenität der Flussdichte korrigiert. Somit können vorteilhaft Verzerrungen im Magnetfeld, die bei aufeinanderfolgenden aber ungleichmäßig langen Polen sich ergeben, ausgeglichen werden. Da außerdem die Absolutspur vor der Inkrementalspur auf dem Linearmaßstab aufgebracht wird, wird bei der Fertigung der Inkrementalspur der störende Streufeldeinfluss der Absolutspur bereits berücksichtigt und kompensiert. Dadurch ist mit dem erfindungsgemäß hergestellten Linearmaßstab eine große Abstandstoleranz erreichbar, d.h. das vom Sensor real gemessene Magnetfeld des erfindungsgemäß hergestellten Linearmaßstabs verändert sich nur geringfügig bei unterschiedlichen Messabständen verglichen mit einer Sensormessung eines herkömmlichen Linearmaßstabs.

Bei einem nominellen Messabstand von 1 bis 3 mm ergibt sich eine Abstandstoleranz von ± 1 mm bei einer Gesamtlänge des Linearmaßstabs von mehr als 3 m. Der Linearmaßstab hat eine Breite von 10 mm, wobei die Inkrementalspur und die Absolutspur unmittelbar nebeneinanderliegend angeordnet sind und eine Breite von 5 mm oder weniger haben. Bei diesen Randbedingungen ist mit dem erfindungsgemäß hergestellten Linearmaßstab eine Systemgenauigkeit von mehr als 20 µm pro Meter bei einer maximalen Verfahrgeschwindigkeit von mehr als 10 m/s erzielbar.

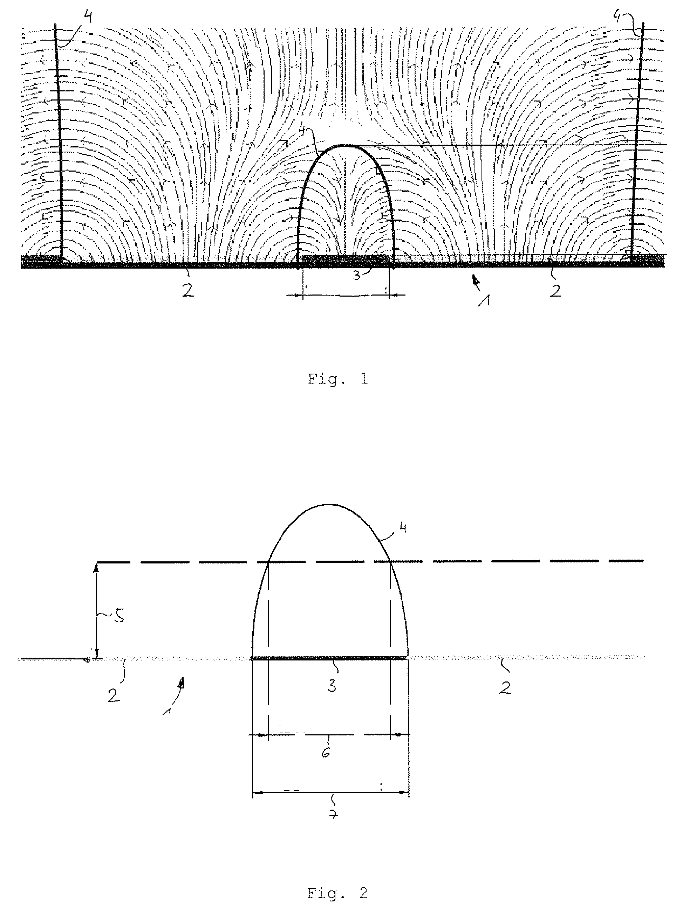

Im Folgenden wird die Erfindung anhand eines bevorzugten Ausführungsbeispiels eines erfindungsgemäß hergestellten Linearmaßstabs anhand der beigefügten schematischen Zeichnungen erläutert. Es zeigen Figuren 1 bis 4 einen Längsschnitt durch das Ausführungsbeispiel des Linearmaßstabs.

Wie es aus Figuren 1 bis 4 ersichtlich ist, weist ein magnetischer Linearmaßstab 1 eine wechselseitige Aneinanderreihung von Nordpolen 2 und Südpolen 3 auf, wobei die Longitudinalerstreckung der Nordpole 2 und der Südpole 3 ungleichmäßig ist. In dem gezeigten Ausführungsbeispiel sind die Nordpole 2 dreimal so lang wie der dazwischen liegende Südpol 3. Außen neben den Nordpolen 2 liegen wieder Südpole mit einer Longitudinalerstreckung vergleichbar zu den Nordpolen 2. Mit 4 ist eine Linie gekennzeichnet, auf der die Flussdichtenkomponente senkrecht zum Linearmaßstab 1 Null ist.

Beim Fahren eines Sensors entlang des Linearmaßstabs zum Messen der Polwechsel von den Nordpolen 2 zu den Südpolen 3 und umgekehrt ist der Sensor im Messabstand 5 über dem Linearmaßstab 1 angeordnet. Durchfährt der Sensor die Null-Linie 4, so wird dies von dem Sensor registriert, wodurch der Wechsel von den Nordpolen 2 zu den Südpolen 3 und umgekehrt erkannt wird. Ziel der Messung mit dem Sensor ist es, die Breite der Nordpole 2 und der Südpole 3 auf dem Linearmaßstab zu erkennen. In den Figuren ist für einen der Südpole 3 die Breite als eine Soll-Teilungsbreite 7 bezeichnet angegeben. Dadurch, dass der Sensor im Messabstand 5 von dem Linearmaßstab 1 angeordnet ist, misst der Sensor allerdings die Messteilungsbreite 6, die sich aus dem Verlauf der Null-Linie 4 im Messabstand 5 ergibt. Aufgrund der längeren Erstreckung der vom Südpol 3 benachbarten Nordpole 2 verglichen mit dem Südpol 3 selbst ist die Null-Linie 4 über dem Südpol 3 bogenförmig ausgebildet. Daraus ergibt sich die Messteilungsbreite 6 kleiner als die Soll-Teilungsbreite 7.

Die in Figur 1 dargestellten Pfeile zeigen die Richtung der Flussdichte in einem Längsschnitt des Linearmaßstabs 1 an. Die Lage des Maximums der Null-Linie 4 über dem Südpol 3 hat einen Maximalabstand zum Linearmaßstab 1, der 1,5mal der Soll-Teilungsbreite 7 beträgt. Somit wäre für den Sensor, der im Abstand von mehr als 1,5mal der Soll-Teilungsbreite 7 vom Linearmaßstab 1 entfernt angeordnet ist, der Südpol 3 nicht mehr zu erkennen.

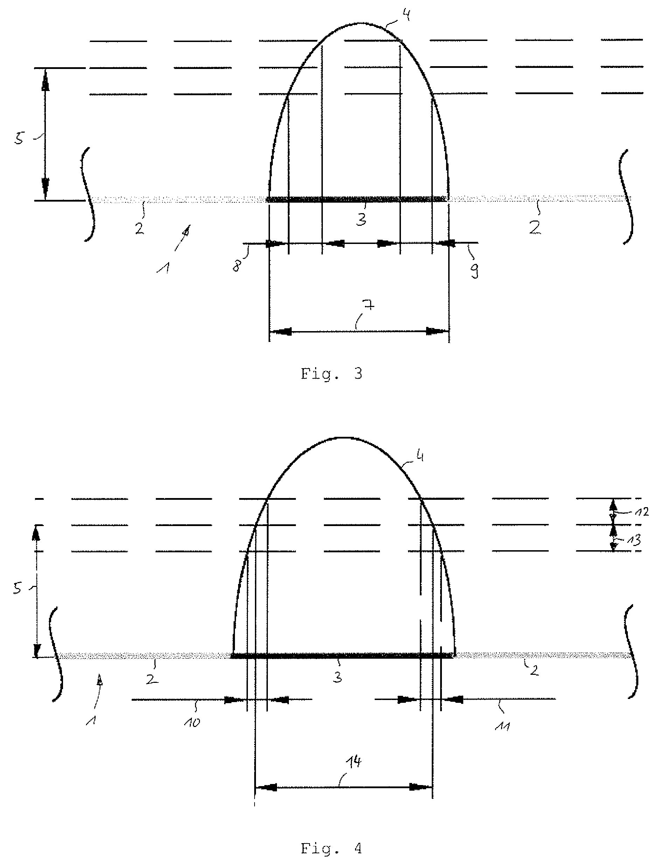

In der Praxis variiert der aktuelle Messabstand des Sensors um den Messabstand 5, so dass sich der Sensor in einem Abstandstoleranzbereich bewegt, der in Figur 4 mit der fünften Abweichung 12 nach oben und der sechsten Abweichung 13 nach unten bezeichnet ist. Aufgrund des bogenförmigen Verlaufs der Null-Linie 4 ergeben sich für die Messteilungsbreite 6 Abweichung 8, 9, wenn die Position des Sensors innerhalb des Abstandstoleranzbereichs schwankt. Daraus resultiert im schlechtesten Fall, nämlich wenn die Position des Sensors um die fünfte Abweichung 12 vom Messabstand 5 nach oben abweicht, eine Messteilungsbreite 6, die etwa halb so lang ist wie die Soll-Teilungsbreite 7.

Beim erfindungsgemäßen Verfahren wird die Magnetisierung des Linearmaßstabs durch eine Nachmagnetisierung korrigiert. Dabei wird die Nachmagnetisierung derart durchgeführt, dass die Soll-Teilungsbreite 7 des Südpols 3 vergrößert wird, wodurch die an den Südpol 3 angrenzenden Nordpole 2 zurückgedrängt wurden. Dadurch verändert sich entsprechend der Verlauf der Null-Linie 4 derart, dass von dem Sensor im Messabstand 5 eine neue Messteilungsbreite 14 gemessen wird, die gleich der ursprünglichen, vor der Nachmagnetisierung vorliegenden Soll-Teilungsbreite 7 ist. Außerdem ist durch die Vergrößerung der Erstreckung des Südpols 3 der Abstand des Maximums der Null-Linie 4 zum Linearmaßstab 1 vergrößert, wodurch die Flanken der Null-Linie 4 an den Rändern des Südpols 3 steiler als vor der Nachmagnetisierung verlaufen. Dadurch sind die aus der fünften Abweichung 12 und der sechsten Abweichung 13 der Position des Sensors bezüglich des Messabstands 5 resultierenden Abweichungen kleiner geworden, woraus sich an den Rändern des Südpols 3 eine dritte Abweichung 10 und eine vierte Abweichung 11 ergeben.

Mit Hilfe der Nachmagnetisierung wird erreicht, dass von dem Sensor im Messabstand 5 mit der neuen Messteilungsbreite 14 die Soll-Teilungsbreite 7 gemessen wird, die vor der Magnetisierung der Südpol 3 auf dem Linearmaßstab eingenommen hat. Außerdem ist die Messung der neuen Messteilungsbreite 14 bezüglich der Abweichungen 12, 13 unempfindlicher als vor der Nachmagnetisierung, wodurch die Sensormessung durch die Nachmagnetisierung genauer geworden ist.

Der Linearmaßstab 1 weist eine Inkrementalspur und eine Absolutspur auf, die nebeneinander liegend angeordnet sind. Der Sensor ist eine analoge Hallzelle. Bevorzugt ist es jedoch, dass beim Lesen der Inkrementalspur, durch die die Systemgenauigkeit festgelegt ist, ein AMR-Sensor verwendet wird. Hierzu wären ebenfalls ein MR-Sensor als auch ein ASIC-Hallsensor geeignet. Bei einer beispielhaften Gesamtlänge des Linearmaßstabs 1 von 4,4 m und der Maßgabe, dass möglichst kurze Nordpole 2 und Südpole 3 verwendet werden und die Längenunterschiede von direkt aufeinanderfolgenden Nordpolen 2 und Südpolen 3 möglichst klein sind, wird zum Vermessen des Linearmaßstabs 1 der Sensor des Typs analoge Hallzelle Typ A1321 verwendet. Der Messabstand 5 beträgt 2 mm, wohingegen ein Bit des Linearmaßstabs 5 mm lang ist. Somit ist die Längserstreckung der Nordpole 2 und der Südpole 3 der Inkrementalspur des Linearmaßstabs 1 ebenfalls 5 mm. Sowohl die Inkrementalspur als auch die Absolutspur sind jeweils 5 mm oder weniger breit, sofern zwischen den beiden Spuren ein unmagnetisierter Bereich liegt, so dass sich eine Gesamtbreite für den Linearmaßstab von 10 mm ergibt.

In einem ersten Schritt wird eine Binärziffersequenz in Form eines binären Pseudozufallscodes auf die Absolutspur geschrieben und dann mittels der Nachmagnetisierung korrigiert. Im Anschluss wird die Inkrementalspur mit einem "0-1"-Bitmuster geschrieben und dann mittels der Nachmagnetisierung korrigiert.

Für einen herkömmlichen Linearmaßstab ergibt sich für die Absolutspur eine Genauigkeit von ± 0,15 mm und für die Inkrementalspur eine Genauigkeit von ± 0,3 mm. Für den erfindungsgemäß hergestellten Linearmaßstab 1 ergibt sich eine viel höhere Genauigkeit, nämlich sowohl für die Absolutspur als auch für die Inkrementalspur von ± 0,01 mm.

### Bezugszeichenliste

- 1: magnetischer Linearmaßstab
- 2: Nordpol
- 3: Südpol
- 4: Null-Linie der senkrechten Flussdichtenkomponente
- 5: Messabstand
- 6: Messteilungsbreite
- 7: Soll-Teilungsbreite
- 8: erste Abweichung
- 9: zweite Abweichung
- 10: dritte Abweichung
- 11: vierte Abweichung
- 12: fünfte Abweichung
- 13: sechste Abweichung
- 14: neue Messteilungsbreite

## Patentansprüche

1. Verfahren zum Herstellen eines magnetischen Linearmaßstabs (1) mit den Schritten:
a) Festlegen einer Gesamtlänge des Linearmaßstabes (1);
b) Erzeugen einer Binärziffersequenz aus "0"-Binärziffern und "1"-Binärziffern basierend auf einem binären Pseudozufallscode aus Zufallszahlen;
c) Ermitteln einer Soll-Teilungsbreite (7) in Abhängigkeit der Gesamtlänge des Linearmaßstabs (1) und der Anzahl der Binärziffern der Binärziffersequenz;
d) Herstellen einer Absolutspur des Linearmaßstabs (1) durch Aufmagnetisieren der Binärziffersequenz, indem für jede "0"-Binärziffer ein Nordpol (2) bzw. Südpol (3) und für jede "1"-Binärziffer ein Südpol (3) bzw. Nordpol (2) magnetisiert wird, wobei jeder Nordpol (2) bzw. Südpol (3) und jeder Südpol (3) bzw. Nordpol (2) die Soll-Teilungsbreite (7) hat, wobei die Maximallänge der "0"-Binärzifferketten und die Maximallänge der "1"-Binärzifferketten jeweils fünf beträgt;
e) Definieren eines Messabstands (5) vom Linearmaßstab (1) und Messen der Magnetisierung der Absolutspur mit einem Sensor, wobei der Sensor den Messabstand (5) von dem Linearmaßstab (1) hat und Messteilungsbreiten (6) der Nordpole und der Südpole der Absolutspur misst;
f) Überlagern der Absolutspur einer Nachmagnetisierung derart, dass die Messteilungsbreiten (6) der Absolutspur innerhalb eines Toleranzwerts bezogen auf die Soll-Teilungsbreite (7) liegen, gegebenenfalls mehrfach wiederholt mit Schritt e;
g) Herstellen einer Inkrementalspur des Linearmaßstabs (1) durch Aufmagnetisieren eines "0-1"-Binärziffermusters unmittelbar neben der Absolutspur, indem für jede "0"-Binärziffer ein Nordpol (2) bzw. Südpol (3) und für jede "1"-Binärziffer ein Südpol (3) bzw. Nordpol (2) magnetisiert wird, wobei jeder Nordpol (2) und jeder Südpol (3) die Soll-Teilungsbreite (7) hat;
h) Messen der Magnetisierung der Inkrementalspur mit dem Sensor, wobei der Sensor den Messabstand (5) von dem Linearmaßstab (1) hat und Messteilungsbreiten (6) der Nordpole (2) und der Südpole (3) der Inkrementalspur misst;
i) Überlagern der Inkrementalspur einer Nachmagnetisierung derart, dass die Messteilungsbreiten (6) der Inkrementalspur innerhalb eines Toleranzwerts bezogen auf die Soll-Teilungsbreite (7) liegen, gegebenenfalls mehrfach wiederholt mit Schritt h.

2. Verfahren gemäß Anspruch 1, wobei die Binärziffersequenz aus den "0"-Binärziffern und den "1"-Binärziffern mit dem binären Pseudozufallscode derart erzeugt wird, dass jede Zufallszahl nur einmal auftritt sowie die Stellenzahl der größten Zufallszahl minimiert ist, die Maximallänge der "0"-Binärzifferketten und die Maximallänge der "1"-Binärzifferketten minimiert sind und die Längenunterschiede von Binärzifferkette zu Binärzifferkette minimiert sind.

3. Verfahren gemäß Anspruch 1 oder 2, wobei die größte Zufallszahl zwölf Binärzifferstellen hat.

4. Verfahren gemäß einem der Ansprüche 1 bis 3, wobei der Toleranzwert für die Messteilungsbreiten bezogen auf die Soll-Teilungsbreite kleiner oder gleich 0,01 beträgt.

5. Verfahren gemäß einem der Ansprüche 1 bis 4, wobei die Soll-Teilungsbreite größer oder gleich 5 mm beträgt.

6. Verfahren gemäß einem der Ansprüche 1 bis 5, wobei der Sensor eine analoge Hallzelle ist.

## Claims

1. Method for producing a magnetic linear scale (1) having the steps:
a) determining a total length of the linear scale (1);
b) producing a binary number sequence comprising "0" binary numbers and "1" binary numbers based on a binary pseudo random code comprising random numbers;
c) establishing a desired division width (7) in accordance with the total length of the linear scale (1) and the number of binary numbers of the binary number sequence;
d) producing an absolute track of the linear scale (1) by means of magnetising the binary number sequence by a north pole (2) or south pole (3) being magnetised for each "0" binary number and a south pole (3) or north pole (2) being magnetised for each "1" binary number,
wherein each north pole (2) or south pole (3) and each south pole (3) or north pole (2) has the desired division width (7), wherein the maximum length of the "0" binary number chains and the maximum length of the "1" binary number chains is five in each case;
e) defining a measurement spacing (5) from the linear scale (1) and measuring the magnetisation of the absolute track with a sensor, wherein the sensor has the measurement spacing (5) from the linear scale (1) and measures measurement division widths (6) of the north poles and the south poles of the absolute track;
f) superimposing the absolute track of a remagnetisation in such a manner that the measurement division widths (6) of the absolute track are within a tolerance value with respect to the desired division width (7), optionally repeated several times with step e;
g) producing an incremental track of the linear scale (1) by means of magnetising a "0-1" binary number pattern directly beside the absolute track by a north pole (2) or south pole (3) being magnetised for each "0" binary number and a south pole (3) or north pole (2) being magnetised for each "1" binary number, wherein each north pole (2) and each south pole (3) has the desired division width (7),
h) measuring the magnetisation of the incremental track with the sensor, wherein the sensor has the measurement spacing (5) from the linear scale (1) and measures measurement division widths (6) of the north poles (2) and the south poles (3) of the incremental track;
i) superimposing the incremental track of a remagnetisation in such a manner that the measurement division widths (6) of the incremental track are within a tolerance value with respect to the desired division width (7), optionally repeated several times with step h.

2. Method according to claim 1, wherein the binary number sequence comprising the "0" binary numbers and the "1" binary numbers is produced with the binary pseudo random code in such a manner that each random number occurs only once and the number of digits of the largest random number is minimised, the maximum length of the "0" binary number chains and the maximum length of the "1" binary number chains are minimised and the length differences from binary number chain to binary number chain are minimised.

3. Method according to claim 1 or 2, wherein the largest random number has twelve binary digit places.

4. Method according to any one of claims 1 to 3, wherein the tolerance value for the measurement division widths with respect to the desired division width is less than or equal to 0.01.

5. Method according to any one of claims 1 to 4, wherein the desired division width is greater than or equal to 5 mm.

6. Method according to any one of claims 1 to 5, wherein the sensor is an analogue Hall cell.

## Revendications

1. Procédé de fabrication d'une échelle linéaire magnétique (1), le procédé présentant les étapes suivantes :
a) détermination d'une longueur totale de l'échelle linéaire (1),
b) formation d'une séquence de chiffres binaires constituée de chiffres binaires "0" et de chiffres binaires "1" à base d'un code binaire pseudo-aléatoire constitué de nombres aléatoires,
c) détermination d'une largeur de pas souhaitée (7) en fonction de la longueur totale de l'échelle linéaire (1) et du nombre de chiffres binaires de la séquence de chiffres binaires,
d) établissement d'une trace absolue de l'échelle linéaire (1) par magnétisation de la séquence de chiffres binaires en magnétisant pour chaque chiffre binaire "0" un pôle nord (2) ou un pôle sud (3) et pour chaque chiffre binaire "1" un pôle sud (3) ou un pôle nord (2), chaque pôle nord (2) ou pôle sud (3) et chaque pôle sud (3) ou pôle nord (2) ayant la largeur de pas souhaitée (7), la longueur maximale des chaînes de chiffres binaires "0" et la longueur maximale des chaînes de chiffres binaires "1" étant chaque fois de cinq,
e) définition d'une distance de mesure (5) par rapport à l'échelle linéaire (1) et mesure de la magnétisation de la trace absolue à l'aide d'un capteur, le capteur présentant par rapport à l'échelle linéaire (1) la distance de mesure (5) et mesurant les largeurs (6) de graduation de mesure des pôles nord et des pôles sud de la trace absolue,
f) superposition de la trace absolue d'une post-magnétisation de telle sorte que les largeurs (6) de graduation de mesure de la trace absolue soient situées à l'intérieur d'une valeur de tolérance par rapport à la largeur de pas souhaitée (7), éventuellement avec plusieurs répétitions de l'étape e),
g) établissement d'une trace incrémentielle de l'échelle linéaire (1) par magnétisation d'un motif de chiffres binaires "0-1" directement à côté de la trace absolue, en magnétisant pour chaque chiffre binaire "0" un pôle nord (2) ou un pôle sud (3) et pour chaque chiffre binaire "1" un pôle sud (3) ou un pôle nord (2), chaque pôle nord (2) et chaque pôle sud (3) ayant la largeur de pas souhaitée (7),
h) mesure de la magnétisation de la trace incrémentielle par le capteur, le capteur présentant la distance de mesure (5) par rapport à l'échelle linéaire (1) et mesurant les largeurs (6) de graduation de mesure des pôles nord (2) et des pôles sud (3) de la trace incrémentielle et
i) superposition de la trace incrémentielle d'une post-magnétisation de telle sorte que les largeurs (6) de graduation de mesure de la trace incrémentielle soient situées à l'intérieur d'une valeur de tolérance par rapport à la largeur de pas souhaitée (7), éventuellement avec plusieurs répétitions de l'étape h).

2. Procédé selon la revendication 1, dans lequel la séquence de chiffres binaires constituée des chiffres binaires "0" et des chiffres binaires "1" est formée avec le code binaire pseudo-aléatoire de telle sorte que chaque nombre aléatoire n'intervienne qu'une seule fois, que le nombre de positions du plus grand nombre aléatoire soit minimisé, que la longueur maximale des chaînes de chiffres binaires "0" et la longueur maximale des chaînes de chiffres binaires "1" soit minimisée et que la différence de longueur entre une chaîne de chiffres binaires et une autre chaîne de chiffres binaires soit minimisée.

3. Procédé selon la revendication 1 ou 2, dans lequel le plus grand nombre aléatoire présente douze positions de chiffres binaires.

4. Procédé selon l'une des revendications 1 à 3, dans lequel la valeur de tolérance des largeurs de graduation de mesure par rapport à la largeur de pas souhaitée soit inférieure ou égale à 0,01.

5. Procédé selon l'une des revendications 1 à 4, dans lequel la largeur de pas souhaitée est supérieure ou égale à 5 mm.

6. Procédé selon l'une des revendications 1 à 5, dans lequel le capteur est une cellule de Hall analogique.
